# EUROPÄISCHE PATENTSCHRIFT

(11) **EP 1 548 527 B1**
(45) Veröffentlichungstag und Bekanntmachung des Hinweises auf die Patenterteilung: **17.02.2010**
(21) Anmeldenummer: 04029077.7
(22) Anmeldetag: 08.12.2004
(51) Int. Cl.: G05B 19/042, G05B 19/4093

(54) **Steuerungs- oder Regelungseinrichtung einer Werkzeug- oder Produktionsmaschine**
Control system for a machine tool or a production machine
Commande pour une machine-outil ou machine de production

(30) Priorität: 22.12.2003 DE 10360528; 17.09.2004 DE 102004045195
(43) Veröffentlichungstag der Anmeldung: 29.06.2005
(73) Patentinhaber: SIEMENS AKTIENGESELLSCHAFT, 80333 München (DE)
(72) Erfinder: Feuerbach, Armin, 91085 Weisendorf (DE); Heinemann, Gerhard, Dr., 91058 Erlangen (DE); Höhnert, Henning, 91058 Erlangen (DE); Krebber, Eckart, 91056 Erlangen (DE); Luber, Karl, 91056 Erlangen (DE)

(56) Entgegenhaltungen:
- EP-A- 0 207 998
- EP-A- 0 813 131
- EP-A- 1 260 887
- EP-A- 1 308 807
- DE-A1- 19 614 131
- US-B1- 6 272 398

## Beschreibung

Die Erfindung betrifft eine Steuerungs- oder Regelungseinrichtung einer Werkzeug- oder Produktionsmaschine sowie ein Verfahren zur Parametrierung einer Steuerungs- oder Regelungseinrichtung einer Werkzeug- oder Produktionsmaschine.

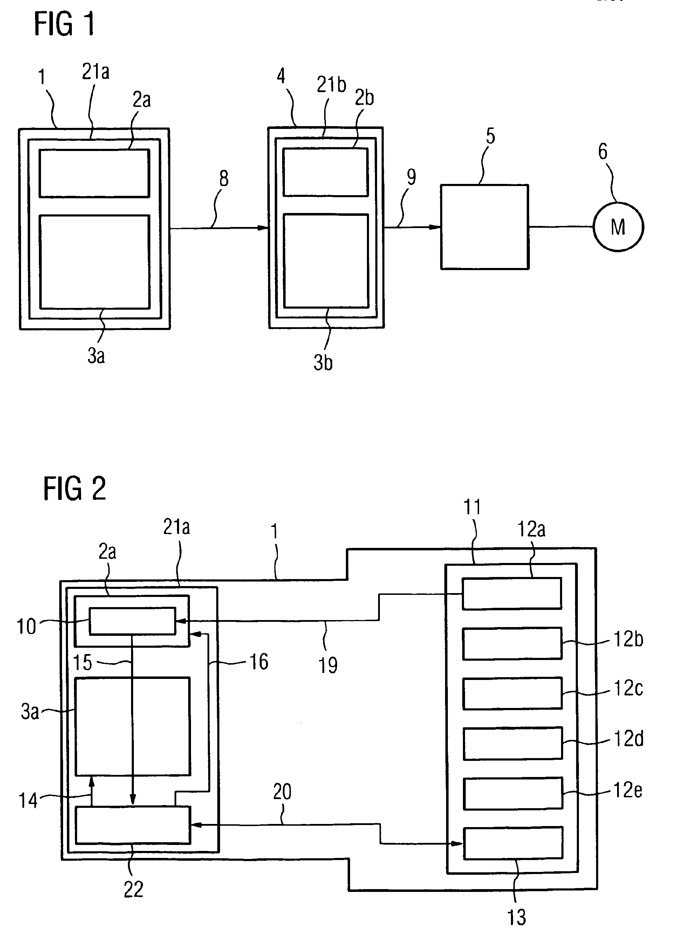

In FIG 1 ist in Form eines Blockschaltbildes schematisch das Antriebskonzept einer handelsüblichen Werkzeug- oder Produktionsmaschine dargestellt. Von einer Steuerung 1 werden Sollgrößen für eine Regelung 4 berechnet und diese der Regelung 4 über eine Verbindung 8 zugeführt. Die Regelung 4 regelt z.B. die Motordrehzahl eines Motors 6 entsprechend den von der Steuerung 1 vorgegebenen Sollgrößen. Über eine Verbindung 9 werden Regelausgangsgrößen von der Regelung 4 einem Umrichter 5 als Eingangsgrößen zugeführt, der den Motor 6 speist. Die notwendige Rückführung von Regleristgrößen ist in FIG 1 der Übersichtlichkeit halber nicht dargestellt.

Auf Grund der hohen Echtzeit-Anforderungen ist die Regelungseinrichtung 4 handelsüblich auf der Plattform eines speziellen Embedded-Rechnersystems 21b verwirklicht. Die Steuerungseinrichtung 1 ist ebenfalls handelsüblich in Form eines Embedded-Rechnersystems 21a verwirklicht.

Embedded-Rechersysteme werden in der Antriebs- und Automatisierungstechnik häufig verwendet. Sie zeichnen sich dadurch aus, dass sie in das zu automatisierende Gerät integriert sind und auch eigenständig, d.h. ohne die bei Personal Computern üblichen notwendigen Peripheriekomponenten wie z.B. Tastatur, Maus oder Bildschirm betreibbar sind. Im Gegensatz zu Personal Computern wird die Software eines Embedded-Rechnersystems nicht vom Anwender gestartet, sondern ist in Form einer so genannten Firmware fest in das Gerät installiert und wird beim Einschalten des Gerätes automatisch gestartet.

Das Embedded-Rechnersystem 21a der Steuerung 1 weist eine Echtzeitsoftware 3a, welche auf einen Echtzeitbetriebssystem abläuft, auf. Innerhalb der Echtzeitsoftware 3a sind die wesentlichen Steuerungsfunktionalitäten der Steuerungseinrichtung 1 realisiert. Zusätzlich besitzt die Steuerung 1, insbesondere bei komplexeren Maschinen eine Nichtechtzeitsoftware 2a. Die Nichtechtzeitsoftware 2a dient im wesentlichen zur Realisierung von Bedien- und Visualisierungsfunktionen der Maschine. Entsprechend besitzt die Regelungseinrichtung 4 ein Embedded-Rechnersystem 21b mit einer Echtzeitsoftware 3b zur Realisierung der Regelungsfunktionalität, welche auf einem Echtzeitbetriebssystem abläuft und eine nichtechtzeitfähige Software 2b, die auf einen Nichtechtzeitbetriebssystem abläuft und im wesentlichen zur Realisierung von Bedienfunktionalitäten und Visualisierungsfunktionalitäten der Regelung 4 dient.

Da man die Steuerungseinrichtung 1 oder die Regelungseinrichtung 4 als jeweils einheitliche Hardwareplattform für die unterschiedlichsten Maschinentypen und Anwendungen verwenden will, ist bei heutzutage üblichen Maschinen die Parametrierung einer solchen Steuerungs- oder Regelungseinrichtung aufwendig und komplex. So können z.B. an die Regelungseinrichtung 4 auch mehrere Umrichter mit einem jeweils zugeordneten Motor angeschlossen sein. Weiterhin können z.B. verschiedene Motorentypen verwendet werden oder an die Steuerung 1 kann nicht nur eine Regelung 4, sondern mehrere Regelungen angeschlossen sein. Auch kann z.B. die Anzahl der Geber zur Ermittlung der Istgrößen für jede Maschine unterschiedlich sein. Da jeder Maschinentyp und jede Maschinenkonfiguration eine eigene individuelle Parametrierung aufweist und je nach Konfiguration die Anzahl der Parameter und die Art der Parameter schwanken kann ist die Parametrierung einer solchen Maschine bisher sehr aufwendig.

Dies führt heutzutage dazu, dass eine handelsübliche Steuerungs- oder Regelungseinrichtung eine Vielzahl von einstellbaren Parametern zur Parametrierung der Steuerungs- oder Regelungseinrichtung besitzt, über die ein Anwender die Steuerungs- oder Regelungseinrichtung an die jeweilige Applikation anpassen muss. Dabei werden Parameterwerte der Parameter eingestellt. Die Anzahl der Parameter stellt eine Obermenge für alle möglichen Einstellungen dar. Für einen konkreten Anwendungsfall müssen jedoch oft nur weniger Parameter verstellt werden. Der Anwender wird jedoch mit der Gesamtheit der Parameter konfrontiert, was zu einer großen Komplexität und mangelnder Übersichtlichkeit des Antriebszustandes der Maschine und damit zu zeitraubender Fehlersuche bei Problemen führt.

Um für bestimmte Standardanwendungen eine vereinfachte Inbetriebnahme zu ermöglichen, können heutzutage über einen Einstellparameter verschiedene Sätze von voreingestellten Werten, so genannten Default-Werten für die Parametrierung ausgewählt werden. Diese Auswahl ist jedoch aus Aufwandsgründen auf eine kleine Anzahl von fest definierten einfachen Anwendungen begrenzt. Außerdem sind diese auswählbaren Default-Einstellungen fest und können nicht variabel auf den unterschiedlichen Ausbaugrad modularer Maschinen reagieren. Die in der Steuerungs- oder Regelungseinrichtung auswählbaren Applikation müssen hierbei auch gleichzeitig in derselben Form auf externen Tools, wie z.B. auf einen Inbetriebnahme-Programm auf einen PC zur Verfügung gestellt werden, was zu umfangreichen Randbedingungen bezüglich der Kompatibilität zwischen der Softwareversion der Steuerungs- oder Regelungseinrichtung und z.B. einem auf einem externen Tool ablaufenden Inbetriebnahmeprogramm führt.

Aus der EP 0 207 998 A1 ist ein Verfahren zur Bearbeitung von NC-Daten bekannt. Das Verfahren umfasst ein interaktives Eingeben von Daten, die in Bezug zu Hüllkurvendaten stehen, ein Speichern eines Verarbeitungsprogramms zur automatischen Bearbeitung der NC-Daten mit Hilfe der Hüllkurvendaten und Makros zur Bestimmung von Hilfsdaten, die zur Verarbeitung der NC-Daten benötigt werden. Mit Hilfe eines geeigneten Makros werden die Hilfsdaten für den Bearbeitungsvorgang bestimmt. Schließlich werden die NC-Daten derart bearbeitet, dass der Verarbeitungsprozess in Einklang mit den Hüllkurvendaten und den Hilfsdaten für die Bearbeitung durch das Verarbeitungsprogramm gesteuert werden kann.

Die EP 0 813 131 A1 offenbart ein grafisches Benutzerinterface, wobei dem Benutzer bestimmte Wahlmöglichkeiten geboten werden.

Aufgabe der vorliegenden Erfindung ist es daher eine einfache Parametrierung einer Steuerungs- oder Regelungseinrichtung einer Werkzeug- oder Produktionsmaschine zu ermöglichen.

Die Lösung der Aufgabe gelingt mittels einer Steuerungs- und/oder Regelungseinrichtung mit den Merkmalen nach Anspruch 1 und mittels eines Verfahrens mit den Merkmalen nach Anspruch 7. Die Unteransprüche sind erfinderische Weiterbildungen.

In einer vorteilhaften Ausgestaltung des Verfahren wird das Makro bei einem Hochlauf und/oder bei einem Rücksetzen der Steuerungs- und/oder Regelungseinrichtung ausgeführt. Die Ausführung erfolgt vorteilhafter Weise automatisch. Die Steuerungs- und/oder Regelungseinrichtung ist also dergestalt ausbildbar, dass deren Hochlauf und/oder deren Rücksetzen (Reset) mittels eines Makros verändert werden kann. Das Makro wird während des Hochlaufs bzw. während des Rücksetzens aufgerufen. Sind mehrere Makros vorhanden, so kann ein auszuführendes Makro festgelegt werden. Mit einem Makro ist es z.B. auch möglich jegliche Parametrierungsabfolgen automatisiert ablaufen zu lassen. Das Makro ist beispielsweise auch parametrierbar und/oder in eine Steuerungs- und/oder Regelungseinrichtung nachladbar.

Eine Definition der Abläufe bei einem ersten Hochlauf oder nach einem Rücksetzen (Urlöschung) der Steuerungs- und/oder Regelungseinrichtung ist beispielsweise durch einen Anwender ohne eine spezielle Entwicklungsumgebung möglich. Auf diese Weise ist es möglich eine Selbstinbetriebnahme der Steuerungs- und/oder Regelungseinrichtung anzustoßen. Die Steuerungs- und/oder Regelungseinrichtung erkennt automatisch angeschlossene Bauteile wie z.B. Geber, Temperatursensoren, Achsen, usw. und nimmt sich selbst in Betrieb. Beispielsweise wird die Konfiguration des Regelungs- und/oder Steuerungssystems passend zur vorgefundenen und automatisch ermittelten Verdrahtung des Systems automatisch hergestellt, sowie die Signalverschaltung innerhalb des Regelungs- und/oder Steuerungssystems, insbesondere auch bezüglich der Peripherie automatisch gemäß eines Makros hergestellt. Dabei können z.B. auch Signalverschaltungen getätigt werden, die gegen Veränderung geschützt sind.

Im Rahmen der vorliegenden Erfindung werden unter dem Begriff Werkzeugmaschinen z.B. ein- oder mehrachsige Dreh-, Fräs-, Bohr- oder Schleifmaschinen verstanden. Zu den Werkzeugmaschinen werden im Rahmen der vorliegenden Erfindung auch noch Bearbeitungszentren, lineare und rotatorische Transfermaschinen, Lasermaschinen oder Wälz- und Verzahnmaschinen gezählt. Allen gemeinsam ist, dass ein Material bearbeitet wird, wobei diese Bearbeitung mehrachsig ausgeführt werden kann. Zu den Produktionsmaschinen werden im Rahmen der vorliegenden Erfindung z.B. Textil-, Kunststoff-, Holz-, Glas-, Keramik- oder Steinbearbeitungsmaschinen gezählt. Maschinen der Umformtechnik, Verpackungstechnik, Drucktechnik, Fördertechnik, Aufzugstechnik, Pumpentechnik, Transporttechnik, Lüftertechnik sowie Windkrafträder, Hebewerkzeuge, Kräne, Roboter und Fertigungsstraßen gehören ebenfalls im Rahmen der vorliegenden Erfindung zu den Produktionsmaschinen.

Eine weitere vorteilhafte Ausbildung der Erfindung ist dadurch gekennzeichnet, dass das Makro Kontrollanweisungen enthält. Wenn das Makro Kontrollanweisungen, z.B. in Form von Schleifen und bedingten Ausführungen enthält, kann die Parametrierung auf einfache Art und Weise an die vorliegende Maschine individuell angepasst werden.

In einer weiteren Ausgestaltung der Erfindung sind Makros ineinander verschachtelt. Ein Makro kann also ein weiteres Makro aufweisen und/oder ein anderes Makro aufrufen.

Weiterhin erweist es sich als vorteilhaft, wenn das Makro in einer Hochsprache programmierbar ist. Mit Hilfe einer solchen Programmiersprache kann das Makro besonders einfach programmiert werden.

Eine weitere vorteilhafte Ausbildung der Erfindung ist dadurch gekennzeichnet, dass als Hochsprache XML oder HTML oder ACX vorgesehen ist. XML (Extended Markup Language) und HTML (Hyper Text Markup Language) sind in der Technik üblicherweise verwendete Hochsprachen. Ähnlich dieser Hochsprachen können auch proprietäre Formate wie ACX zur Anwendung kommen. ACX basiert auf XML, ist jedoch ein binäres Format.

Ferner erweist es sich als vorteilhaft, dass das Makro zu einem beliebigen Zeitpunkt nachladbar und/oder ausführbar ist, da die Parametrierung dann vom Anwender zu jedem beliebigen Zeitpunkt verändert werden kann.

Weiterhin erweist es sich als vorteilhaft, dass ein Anwender zur Eingabe von Daten vom Makro aufforderbar ist. Hierdurch wird eine aktive Kommunikation mit einem Anwender ermöglicht. So können z.B. die Makros auf einem Bildschirm Text erscheinen lassen, der den Anwender zu Eingaben auffordern. Hierdurch kann z.B. mit Hilfe von geeigneten Fragen, die vom Makro an den Anwender gestellt werden, die aktuelle Maschinenkonfiguration vom Makro ermittelt werden.

Ferner erweist es sich als vorteilhaft, dass als Rechnersystem ein Embedded-Rechnersystem vorgesehen ist. Embedded-Rechnersysteme werden zur Steuerung- oder Regelung von Werkzeug- oder Produktionsmaschinen häufig eingesetzt, wobei der Einsatz eines Interpreters innerhalb eines Embedded-Rechnersystems bisher nicht bekannt ist.

Ferner erweist es sich als vorteilhaft, dass das Makro in einer Hochsprache programmiert wird. Mit Hilfe einer solchen Programmiersprache kann das Makro besonders einfach programmiert werden.

Weiterhin erweist es sich als vorteilhaft, dass das Makro zu einem beliebigen Zeitpunkt nachgeladen und/oder ausgeführt werden kann, da die Parametrierung dann vom Anwender zu jedem beliebigen Zeitpunkt verändert werden kann.

Weiterhin erweist es sich als vorteilhaft, wenn die erfindungsgemäße Steuerungs- oder Regelungseinrichtung zur Steuerung oder Regelung einer Werkzeug- oder Produktionsmaschine verwendet wird.

Weiterhin erweist es sich als vorteilhaft, dass das Makro einen Anwender zur Eingabe von Daten auffordert. Hierdurch wird eine aktive Kommunikation mit einem Anwender ermöglicht. So können z.B. die Makros auf einen Bildschirm Text erscheinen lassen, der den Anwender zu Eingaben auffordern. Hierdurch kann z.B. mit Hilfe von geeigneten Fragen, die vom Makro an den Anwender gestellt werden, die aktuelle Maschinenkonfiguration vom Makro ermittelt werden.

In einer weiteren vorteilhaften Ausgestaltung der Steuerungs- und/oder Regelungseinrichtung bilden die Steuerungs- und Regelungseinrichtung ein einheitliches Steuerungs- und Regelungssystem. Mittels eines derartigen Systems sind z.B. sowohl Steuerungs- wie auch Regelungsaufgaben lösbar. Hierfür ist auch ein einheitliches Ablaufebenenmodell dergestalt ausbildbar, dass es mehrere Ablaufebenen unterschiedlichen Typs mit unterschiedlicher Priorität aufweist, wobei von höchster bis niedrigster Priorität verschiedene Anwender- und Systemebenen vorgesehen sind und dass jeweils Technologiepakete anwenderseitig in das Engineering- und/oder Run-Time-System ladbar sind, dass eine Datenquelle für Beschreibungsinformationen für Systemvariablen sowie gegebenenfalls Alarme und/oder Sprachbefehle über einen Umsetzer dem Engineering-System Sprachbefehle und/oder Systemvariablen zur Verfügung stellt, dass aus dem Run-Time-System die Systemvariablen mit aktuellen Daten des technischen Prozesses versorgbar sind und daß über eine Bedienoberfläche des Engineering-Systems weitere Eingaben anwenderseitig machbar sind.

In einer weiteren vorteilhaften Ausgestaltung ist ein Makro derart ausgebildet, dass dieses auf zumindest zwei Steuerungs- und/oder Regelungseinrichtungen wirkt bzw. diese in Ihrer Software beeinflusst. Ein Makro ist also auch dafür vorsehbar mehrere datentechnisch miteinander verbundenen Einrichtungen zur Steuerung und/oder Reglung zu beeinflussen. Im übrigen ist darauf hinzuweisen, dass bei Einrichtungen zur Steuerung und/oder Regelung diese vielfach sowohl zur Ausübung von Steuerungsaufgaben wie auch zu Ausübung von Regelungsaufgaben vorgesehen sind, so dass sich die Begriffe Steuerungseinrichtung und Regelungseinrichtung bezüglich ihrer Funktion, Aufgabe und Ausführung oft nicht mehr trennen lassen.

Vorteilhafter Weise lässt sich das Makro einer Ablaufebene zuweisen. Das Makro läuft also in der zugewiesenen Ablaufebene ab. Weist das Makro verschiedene Anweisungen auf, so kann beispielsweise jede Anweisung einer bestimmten Ablaufebene zugeordnet werden. Dies hat den Vorteil, dass ein Makro zeitoptimiert programmiert werden kann.

In einer weiteren Ausgestaltung ist das Makro bei einem Hochlauf und/oder bei einem Rücksetzen der Steuerungs- und/oder Regelungseinrichtung ausführbar. Die Ausführung erfolgt beispielsweise automatisch. Gerade beim Hochlaufen bzw. beim Rücksetzen ist es vorteilhaft Anweisungen des Makros einer Ablaufebene zuzuordnen, damit das Rücksetzen bzw. der Hochlauf schneller abgeschlossen werden kann.

Sind mehrere Makros vorhanden bzw. programmiert, so kann ein Anwender das für ihn vorteilhafte Makro auswählen und/oder aktivieren.

Die Verwendung eines Makros kann auch bei einem Engineeringsystem erfolgen. Das Engineeringsystem dient beispielsweise der Programmierung einer Anwendersoftware. Die Nutzung des Makros bei einem Engineeringsystem erfolgt analog zur Nutzung ein der Steuerungs- und Regelungseinrichtung.

Bei einem Engineeringsystem zur Programmierung einer Software, welche auf einer Steuerungs- und/oder Regelungseinrichtung ablaufbar ist sind applikationsspezifische Makros erstellbar und/oder ausführbar. Das ausführbare Makro weist insbesondere Zuweisungsanweisungen und/oder Abfrageanweisungen und/oder Kontrollanweisungen auf. Abfrageanweisungen sind beispielsweise Abfragen von Systemzuständen, so kann z.B. ein Befehl lauten mit einer Anweisung zu warten, bis ein bestimmter Systemzustand erreicht ist. Mittels des Makros ist eine Software der Steuerungs- und/oder Regelungseinrichtung, insbesondere eine Anwendersoftware (Anwendungssoftware) zumindest abänderbar. Auch Parameter und deren Parameterwerte sind mittels eines Makros abänderbar. Die Abänderbarkeit betrifft allerdings vorteilhafter Weise nicht nur die Anwendersoftware sondern z.B. auch eine Firmware.

Ausführungsbeispiele der Erfindung sind in der Zeichnung dargestellt und werden im folgenden näher erläutert. Dabei zeigen:
- FIG 1: das Antriebskonzept einer Werkzeug- oder Produktionsmaschine,
- FIG 2: eine erfindungsgemäße Steuerungseinrichtung,
- FIG 3: ein Makro,
- FIG 4: eine erfindungsgemäße Regelungseinrichtung,
- FIG 5: Ablaufebenen einer klassischen speicherprogrammierbaren Steuerung SPS und
- FIG 6: Ablaufebenen einer Bewegungssteuerung.

In dem Blockschaltbild gemäß FIG 2 ist eine erfindungsgemäße Steuerungseinrichtung 1 dargestellt. Die Steuerung 1 weist eine Echtzeitsoftware 3a, welche auf einem Echtzeitbetriebssystem abläuft, auf. Innerhalb der Echtzeitsoftware 3a sind die wesentlichen Steuerungsfunktionalitäten der Steuerungseinrichtung 1 realisiert. Zusätzlich besitzt die Steuerung 1, eine Nichtechtzeitsoftware 2a. Die Nichtechtzeitsoftware 2a dient im wesentlichen zur Realisierung von Bedien- und Visualisierungsfunktionen der Maschine. Für Visualisierungsfunktionen ist auch ein nichtzyklischer Datenaustausch möglich.

Weiterhin besitzt die Steuerung 1 ein nichtflüchtiges Speichermedium 11, welches z.B. in Form einer Flashkarte oder einer Festplatte vorliegen kann. Auf dem Speichermedium 11 sind im Rahmen des Ausführungsbeispiels gemäß FIG 2 fünf Makros 12a, 12b, 12c, 12d und 12e in Form von ausführbaren Dateien gespeichert. Weiterhin ist auf dem nichtflüchtigen Speichermedium 11 eine Default-Parameterdatei 13 gespeichert, die bei der Inbetriebnahme der Maschine beim erstmaligen Einschalten der Steuerungseinrichtung 1 Default-Parameterwerte zur Verfügung stellt. Die Default-Parameter, der Default-Parameterdatei 13 werden hierzu beim Hochlaufen der Steuerung 1 in einen flüchtigen Speicherbereich 22 kopiert, was durch einen Pfeil 20 in FIG 2 angedeutet ist. Der Speicherbereich 22 kann z.B. in Form eines RAM (Random Access Memory) vorliegen. Die von der nichtechtzeitfähigen Software 2a und der Echtzeitsoftware 3a benötigten Parameter werden der jeweiligen Software vom Speicherbereich 22 zur Verfügung gestellt, was durch zwei Pfeile 14 und 16 angedeutet ist. Die Default-Parameterwerte dienen lediglich dazu, ein ordnungsgemäßes erstmaliges Hochlaufen z.B. im Rahmen einer Inbetriebsetzung der Steuerungseinrichtung 1 zu gewährleisten und enthalten noch keine Informationen über die tatsächlich vorhandene Maschinenkonfiguration.

Als Bestandteil der Nichtechtzeitsoftware 2a des Embedded-Rechnersystems 21a weist das Embedded-Rechnersystems 21a erfindungsgemäß, einen Interpreter 10 auf.

Zur Parametrierung der Maschine wird vom Anwender der Maschine ein Makro ausgewählt, wobei in dem Ausführungsbeispiel gemäß FIG 2, das Skript 12a ausgewählt wurde und in den Interpreter 10 geladen wird, was durch einen Pfeil 19 in FIG 2 angedeutet ist. Das ausführbare Makro 12a wird anschließend vom Interpreter 10 ausgeführt und solchermaßen werden Parameter zur Parametrierung der Steuerungseinrichtung vom Interpreter 10 bestimmt. Die Parameter werden in dem Speicherbereich 22 abgespeichert, wobei die Default-Parameter überschrieben werden. Die Parameter werden der Nichtechtzeitsoftware 2a und der Echtzeitsoftware 3a vom Speicherbereich 22 zur Verfügung gestellt, was durch zwei Pfeile 14 und 16 angedeutet ist. Weiterhin werden die nun korrekten Parameter, die im Speicherbereich 22 gespeichert sind, auf dem nichtflüchtigen Speichermedium 11 gespeichert, wobei in dem Ausführungsbeispiel die Default-Parameter, der Default-Parameterdatei 13 von den neuen nun mehr korrekten Parametern überschrieben werden, was durch den Pfeil 20 in FIG 2 angedeutet ist. Alternativ können die korrekten Parameter aber auch in einer separaten Datei gespeichert werden. Bei einem zukünftigen Hochfahren der Steuerungseinrichtung 1 werden die nunmehr korrekten Parameter der Default-Parameterdatei 13 in den Speicherbereich 22 geladen, so dass der Steuerungseinrichtung 1 sofort die richtigen Parameter der aktuellen Maschinenkonfiguration zur Verfügung stehen, ohne dass ein Makro oder der Interpreter 10 benötigt wird.

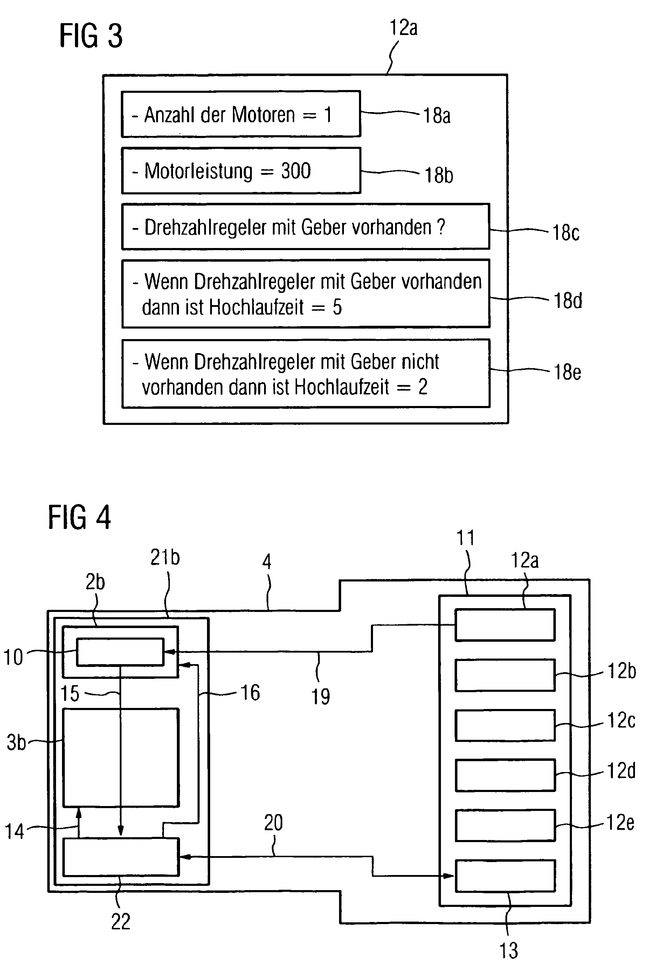

In FIG 3 ist beispielhaft der Aufbau des Makros 12a dargestellt. Das Makro 12a ist in einer Hochsprache, insbesondere in einer interpretativen Hochsprache, d.h. einer Hochsprache, die von einem Interpreter ausgeführt werden kann, programmiert. Der Interpreter kann dabei in Form eines handelsüblichen Interpreters für diese Hochsprache vorliegen. Als interpretative Hochsprachen bieten sich dabei z.B. XML oder HTML an, da diese in der Technik weit verbreitet und somit allgemein bekannt sind. Ein Makro besteht im wesentlichen aus zwei Arten von Anweisungen. So besteht in dem Ausführungsbeispiel das Makro 21a aus den Zuweisungsanweisungen 18a, 18b und den drei Kontrollanweisungen 18c, 18d und 13e. Selbstverständlich kann das Makro 12a wesentlich mehr Anweisungen aufweisen, wobei jedoch der Übersichtlichkeit halber in FIG 3 nur fünf Anweisungen 18a, 18b, 18c, 18d und 18e dargestellt sind. Durch die Zuweisungsanweisung 18a wird in dem Ausführungsbeispiel z.B. der Parameter "Anzahl der Motoren" auf einen Wert von 1 gesetzt. In einer zweiten Zuweisungsanweisung 18b wird der Parameter "Motorleistung" z.B. des Motors 6 gemäß FIG 1 auf einen Wert von 300 Watt gesetzt. Neben den reinen Zuweisungsanweisungen sind, da die Makros ausführbar sind, auch Kontrollanweisungen z.B. in Form von bedingten Verzweigungen, Schleifen oder Abfragen während der Parametrierung an einen Anwender möglich. So fragt z.B. die Kontrollanweisung 18c ab, ob bei der aktuellen Maschinenkonfiguration ein Drehzahlregler mit Geber vorhanden ist.

Eine Anweisung, insbesondere eine Kontrollanweisung, besteht aus einem entsprechenden ausführbaren Programmcode in der verwendeten Hochsprache des Makros. So erzeugt z.B. die Kontrollanweisung 18c für den Anwender auf einem Bildschirm eine entsprechende Eingabemaske und fordert ihn auf, anzugeben, ob ein Drehzahlregler mit Geber vorhanden ist. Der Anwender gibt den entsprechenden Parameter an, z.B. eine 1 wenn ein Drehzahlregler mit Geber vorhanden ist oder eine 0 wenn ein Drehzahlregler ohne Geber vorhanden ist. In den beiden nächsten Kontrollanweisungen 18d und 18e wird anschließend durch die beiden bedingten Verzweigungen der Parameter "Hochlaufzeit" auf 5 Sekunden oder auf 2 Sekunden gesetzt, je nach dem ob ein Geber (z.B. für einen Drehzahlregler) in der momentanen Ausführung der Maschine vorhanden ist oder nicht.

Die solchermaßen bestimmten Parameter werden in einem Speicherbereich 22, wie schon oben beschrieben und durch den Pfeil 15 angedeutet, abgelegt. Es ist somit möglich mit Hilfe eines einzigen Makros sämtliche Parameter der Maschine zu parametrieren. Im allgemeinen ist es jedoch oft sinnvoller mehrere Makros auf dem Speichermedium 11 zu hinterlegen, die dann vom Anwender durch einen Menüpunkt angewählt werden können. Die Makros sind dann auf die individuellen Bedürfnisse des jeweiligen Kunden zugeschnitten. Die Makros sind dabei auf Anforderung vom Anwender zu einem beliebigen Zeitpunkt nachladbar. So können z.B. einzelne Parameter, die im Betrieb der Maschine oder während eines kurzzeitigen Stillstandes der Maschine bei dem z.B. ein neues Werkzeug eingespannt wird, verändert werden müssen, leicht verändert werden.

Selbstverständlich ist es auch möglich, die im Speicherbereich 22 gespeicherten Parameter über die Verbindung 8 gemäß FIG 1 an die Regelung 4 zu übertragen, so dass die Regelungseinrichtung 4 mit Hilfe der Steuerungseinrichtung 1 parametriert werden kann. Auch der umgekehrte Weg ist möglich.

In FIG 4 ist ein weiteres Ausführungsbeispiel der Erfindung, in Form einer Regelungseinrichtung 4, dargestellt. Einige Maschinen, insbesondere einfache Maschinen wie z.B., ein Lüfter besitzt in der Regel keine eigene Steuerungseinrichtung gemäß FIG 1. Die Konfiguration entspricht dann der Konfiguration gemäß FIG 1 ohne die Steuerungseinrichtung 1. Die Soll-Regelgrößen z.B. die Solldrehzahl des Lüfters wird der Regelungseinrichtung 4 dann direkt als feste Sollgröße in Form eines Parameters innerhalb der Regelung vorgegeben.

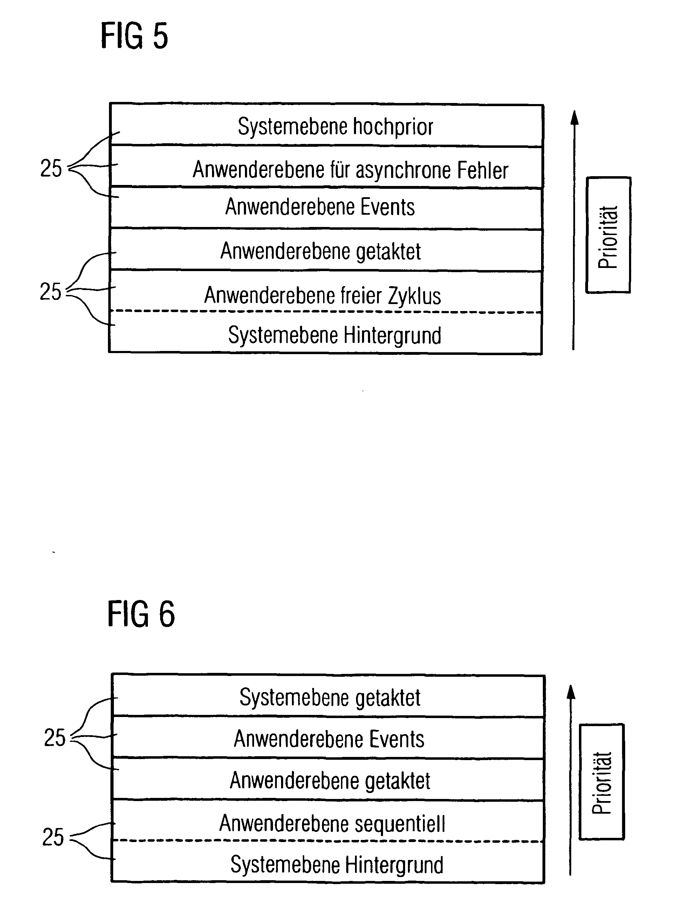

Die erfindungsgemäße Regelungseinrichtung gemäß FIG 4 stimmt mit der erfindungsgemäßen Steuerungseinrichtung 1 gemäß FIG 2 bis auf die Tatsache, dass anstatt der Steuerungseinrichtung 1 eine Regelungseinrichtung 4 vorliegt, sowohl funktionell wie auch in der Bezeichnung der einzelnen Komponenten überein, so dass bezüglich der Funktionsweise der Regelungseinrichtung 4 und Bezeichnung der Komponenten auf die in der Beschreibung zu FIG 2 gemachten Ausführungen verwiesen wird, wobei in FIG 4 im Gegensatz zu FIG 5 die Nichtechtzeitsoftware mit 2a, die Echtzeitsoftware mit 2b und das Embedded-Rechnersystem mit 21b bezeichnet ist. Das erfindungsgemäße Verfahren kann also sowohl zur Parametrierung einer Steuerungseinrichtung 1 wie auch zur Parametrierung einer Regelungseinrichtung 4 verwendet werden.

Selbstverständlich kann das Speichermedium 12 auch außerhalb der erfindungsgemäßen Steuerungs- oder Regelungseinrichtung realisiert sein.

Weiterhin können die Makros auch von externen Einrichtungen wie z.B. von einem Personal Computer, auf dem ein Inbetriebnahme- oder Bedienprogramm abläuft, geladen und interpretiert werden.

Selbstverständlich können zur Realisierung der Erfindung anstatt der Embedded-Rechnersysteme 21a und 21b, auch normale Rechnersysteme z.B. in Form eines Personal Computers, verwendet werden.

In der Darstellung gemäß FIG 5 sind die wesentlichen Ablaufebenen einer klassischen speicherprogrammierbaren Steuerung, angeordnet nach ihrer Priorität, gezeigt. Der Prioritätsanstieg ist dabei durch einen Pfeil symbolisiert. In der niederpriorsten Ebene 25, welche eine Ablaufebenen 25 ist, werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund", im Round-Robin-Verfahren abgewickelt. Der Hintergrund-Systemebene sind z.B. Kommunikationsaufgaben zugeordnet. Bei einer folgenden getakteten Anwenderebene 25, bezeichnet als "Anwenderebene getaktet", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne daß das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren. Das Anwenderprogramm ist eine Software, welche für den Betrieb der Steuerungseinrichtung aber auch der Regelungseinrichtung vorgesehen ist.

Auf die "Anwenderebene getaktet" folgt eine "Anwenderebene Events". Die Reaktion auf externe oder interne Ereignisse (Events) erfolgt innerhalb der "Anwenderebene Events". Ein typisches Beispiel für ein solches Ereignis ist das Überschreiten eines Grenzwerts. In einer "Systemebene hochprior" liegen Aufgaben des Betriebssystems, welche die Arbeitsweise der speicherprogrammierbaren Steuerung sicherstellen.

Die Darstellung gemäß FIG 6 zeigt die wesentlichen Ablaufebenen 25 einer Bewegungssteuerung wie einer NC-Einrichtung oder auch eine CNC-Einrichtung. Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequenziell" haben eine gleiche Priorität, nämlich die niedrigste. Diese aufgabenmäßige Zusammengehörigkeit ist wie bei FIG 5 durch eine gestrichelte Linie symbolisiert. Die Tasks der "Anwenderebene sequenziell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequenziell" laufen die vom Anwender programmierten Programmteile für die eigentliche Steuerungsaufgabe. Stößt die Steuerung in einem dieser Programmteile auf einen Bewegungs- oder Positionierbefehl, wird ein Suspend gesetzt, d.h. das Anwenderprogramm wird an dieser Stelle unterbrochen. Die Abarbeitung dieses Bewegungs- oder Positionierbefehls geschieht in einer höchstprioren "Systemebene getaktet". Ein jeder Lageregler, der in der "Systemebene getaktet" abläuft, führt diesen Bewegungs- bzw. Positionierbefehl aus. Nach Ausführung des Befehls wird in die "Anwenderebene sequenziell" zurückgesprungen und das durch Suspend unterbrochene Anwenderprogramm wird durch ein Resume an der gleichen Stelle fortgesetzt. Die "Systemebene getaktet" enthält neben den schon erwähnten Lagereglern auch den Interpolationsteil der Steuerung.

Ablaufebenen einer Speicherprogrammierbaren Steuerung oder einer Bewegungssteuerung sind in einem kombinierten Steuerungs-Bewegungs-System miteinander kombinierbar.

Makros wie diese in den Figuren 2 bis 4 dargestellt sind können in einer vorteilhaften Ausgestaltung einer Ablaufebene zugeordnet sein, so dass das Makro in dieser Ablaufebene abläuft.

In einer weiteren vorteilhaften Ausgestaltung sind Anweisungen gemäß FIG 3, wie z.B. eine Kontrollanweisung oder eine Zuweisungsanweisung einer oder verschiedenen Ablaufebenen zugeordnet bzw. in diesen ablauffähig.

## Patentansprüche

1. Steuerungs- und/oder Regelungseinrichtung (1,4) einer Werkzeug- oder Produktionsmaschine, wobei die Steuerungs- und/oder Regelungseinrichtung (1,4) ein Rechnersystem (21a, 21b) aufweist, wobei das Rechnersystem (21a, 21b) parametrierbar ist, wobei die Steuerungs- und/oder Regelungseinrichtung (1,4) umfasst:
- Mittel zum zur Verfügung stellen von Default-Parameter in Form einer Default-Parameterdatei (13) bei einem ersten Hochlaufen der Steuerungs- und/oder Regelungseinrichtung (1,4), um ein ordnungsgemäßes erstes Hochlaufen zu gewährleisten, wobei die Default-Parameterdatei (13) hierbei noch keine Informationen über eine tatsächlich vorhandene Maschinenkonfiguration umfasst, Mittel zum Bereitstellen eines ausführbaren Makros (12a,12b,12c,12d,12e) zur Auswahl für einen Anwender oder zur applikationsabhängigen automatischen Auswahl des ausführbaren Makros (12a,12b,12c,12d,12e) zur Parametrierung der Werkzeug- oder Produktionsmaschine ,
- einem Interpreter (10) zum Ausführen des ausführbaren Makros (12a,12b,12c,12d,12e), der Bestandteil einer Nichtechtzeit-Software (2a, 2b) des Rechnersystems (21a, 21b) ist, und zur Ermittlung von Parametern zur Parametrierung der Steuerungs- und/oder Regelungseinrichtung (1,4) auf Basis des ausgeführten Makros (12a,12b,12c,12d,12e), und
- Mittel zum Überschreiben der Default-Parameter der Default-Parameterdatei (13) durch die vom Interpreter (10) auf Basis des ausgeführten Makros (12a,12b,12c,12d,12e) ermittelten Parameter, so dass bei einem zukünftigen Hochlaufen der Steuerungs- und/oder Regelungseinrichtung (1,4) in der Default-Parameterdatei (13) sofort richtige Parameter entsprechend einer aktuellen Maschinenkonfiguration zur Verfügung stehen.

2. Steuerungs- und/oder Regelungseinrichtung nach Anspruch 1, **dadurch gekennzeichnet, dass** das ausführbare Makro (12a,12b,12c,12d,12e) in einer Hochsprache programmiert ist.

3. Steuerungs- und/oder Regelungseinrichtung nach Anspruch 2, **dadurch gekennzeichnete, dass** als Hochsprache XML oder HTML oder ACX vorgesehen ist.

4. Steuerungs- und/oder Regelungseinrichtung nach einem der vorhergehenden Ansprüche, **dadurch gekennzeichnet, dass** das ausführbare Makro (12a,12b,12c, 12d,12e) zu einem beliebigen Zeitpunkt nachladbar und/oder ausführbar ist.

5. Steuerungs- und/oder Regelungseinrichtung nach einem der vorhergehenden Ansprüche, **dadurch gekennzeichnet, dass** der Anwender vom ausführbaren Makro (12a,12b,12c,12d,12e) zur Eingabe von Daten aufgefordert ist.

6. Steuerungs- und/oder Regelungseinrichtung nach einem der vorhergehenden Ansprüche, **dadurch gekennzeichnet, dass** als Rechnersystem (21a,21b) ein Embedded-Rechnersystem vorgesehen ist.

7. Verfahren zur Parametrierung einer Steuerungs- und/oder Regelungseinrichtung (1,4) einer Werkzeug- oder Produktionsmaschine, wobei die Steuerungs- und/oder Regelungseinrichtung (1,4) ein Rechnersystem (21a, 21b) aufweist, wobei das Rechnersystem (21a, 21b) parametrierbar ist, wobei Default-Parameter in Form einer Default-Parameterdatei (13) bei einem ersten Hochlaufen der Steuerungs- und/oder Regelungseinrichtung (1,4) zur Verfügung gestellt werden, um ein ordnungsgemäßes erstes Hochlaufen zu gewährleisten, wobei die Default-Parameterdatei (13) hierbei noch keine Informationen über eine tatsächlich vorhandene Maschinenkonfiguration umfasst,
zur Parametrierung der Werkzeug- oder Produktionsmaschine von einem Anwender oder applikationsabhängig automatisch ein ausführbares Makro (12a,12b,12c,12d,12e) ausgewählt wird, das ausführbare Makro (12a,12b,12c,12d,12e) von einem Interpreter (10) ausgeführt wird, der Bestandteil einer Nichtechtzeit-Software (2a,2b) des Rechnersystems (21a,21b) ist, vom Interpreter (10) Parameter zur Parametrierung der Steuerungs- und/oder Regelungseinrichtung (1,4) aus Basis des ausgeführten Makros (12a,12b,12c,12d,12e) ermittelt werden, und die Default-Parameter der Default-Parameterdatei (13) durch die vom Interpreter (10) auf Basis des ausgeführten Makros (12a,12b,12c,12d,12e) ermittelten Parameter überschrieben werden, so dass bei einem zukünftigen Hochlaufen der Steuerungs- und/oder Regelungseinrichtung (1,4) in der Default-Parameterdatei (13) sofort richtige Parameter entsprechend einer aktuellen Maschinenkonfiguration zur Verfügung stehen.

8. Verfahren nach Anspruch 7, **dadurch gekennzeichnet, dass** das ausführbare Makro (12a,12b,12c, 12d,12e) in einer Hochsprache programmiert wird.

9. Verfahren nach einem der Ansprüche 7 oder 8, **dadurch gekennzeichnet, dass** das ausführbare Makro (12a,12b,12c,12d, 12e) zu einem beliebigen Zeitpunkt nachgeladen und/oder ausgeführt wird.

10. Verfahren nach einem der Ansprüche 7 bis 9, **dadurch gekennzeichnet, dass** das ausführbare Makro (12a,12b,12c, 12d,12e) den Anwender zur Eingabe von Daten auffordert.

11. Verfahren nach einem der Ansprüche 7 bis 10, **dadurch gekennzeichnet, dass** das ausführbare Makro (12a,12b,12c,12d,12e) bei einem Hochlauf und/oder bei einem Rücksetzen der Steuerungs- und/oder Regelungseinrichtung automatisch ausgeführt wird.

## Claims

1. Controller (1, 4) of a machine tool or production machine, with the controller (1, 4) featuring a computer system (21a, 21b), with parameters able to be set for the computer system (21a, 21b), with the controller (1, 4) comprising:
- Means for making available default parameters in the form of a default parameter file (13) when the controller (1, 4) is first started up, in order to guarantee an orderly first start-up, with the default parameter file (13) not yet containing any information here about a machine configuration actually available, Means for providing an executable macro (12a, 12b, 12c, 12d, 12e) for selection by a user or for application-independent automatic selection of the executable macro (12a, 12b, 12c, 12d, 12e) for parameterizing the machine tool or production machine,
- An interpreter (10) for executing the executable macro (12a, 12b, 12c, 12d, 12e) that is a component of non-real-time software (2a, 2b) of the computer system (21a, 21b) and for determining parameters for parameterizing the controller (1, 4) on the basis of the executed macro (12a, 12b, 12c, 12d, 12e), and
- Means for overwriting the default parameters of the default parameter file (13) by the parameters determined by the interpreter (10) on the basis of the executed macro (12a, 12b, 12c, 12d, 12e), so that in a future start-up of the control system (1, 4) correct parameters in accordance with a current machine configuration are immediately available in the default parameter file (13).

2. The controller according to claim 1, **characterized in that** the executable macro (12a, 12b, 12c, 12d, 12e) is programmed in a high-level language.

3. The controller according to claim 2, **characterized in that** XML or HTML or ACX are provided as the high-level language.

4. The controller according to one of the previous claims, **characterized in that** the executable macro (12a, 12b, 12c, 12d, 12e) is able to be reloaded and/or executed at an arbitary point in time.

5. The controller according to one of the previous claims, **characterized in that** the user of the executable macro (12a, 12b, 12c, 12d, 12e) is requested to enter data.

6. The controller according to one of the previous claims, **characterized in that** an embedded computer system is provided as the computer system (21a, 21b).

7. A method for parameterizing a controller (1, 4) for a machine tool or production machine, with the controller (1, 4) having a computer system (21a, 21b), with the computer system (21a, 21b) able to be parameterized, with
default parameters in the form of a default parameter file (13) being provided when the controller (1, 4) is first started up, in order to guarantee an orderly first start-up, with the default parameter file (13) not yet containing any information here about a machine configuration actually available,
for parametrization of the machine tool or production machine by a user or automatically depending on an application, an executable macro (12a, 12b, 12c, 12d, 12e) is selected,
the executable macro (12a, 12b, 12c, 12d, 12e) is executed by an interpreter (10) that is a component of non-real-time software (2a, 2b) of the computer system (21a, 21b),
Parameters for parameterizing the controller (1, 4) are determined by the interpreter (10) based on the axecuted macro (12a, 12b, 12c, 12d, 12e) and the default parameters of the default parameter file (13) are overwritten by the parameters determined by the interpreter (10) on the basis of the executed macro (12a, 12b, 12c, 12d, 12e), so that in a future start-up of the control system (1, 4) correct parameters in accordance with a current machine configuration are immediately available in the default parameter file (13).

8. The method according to claim 7, **characterized in that** the executable macro (12a, 12b, 12c, 12d, 12e) is programmed in a high-level language.

9. The method according to claim 7 or 8, **characterized in that** the executable macro (12a, 12b, 12c, 12d, 12e) is reloaded and/or executed at an arbitary point in time.

10. The method according to one of claims 7 to 9, **characterized in that** the executable macro (12a, 12b, 12c, 12d, 12e) requests the user to enter data.

11. The method according to one of claims 7 to 10, **characterized in that** the executable macro (12a, 12b, 12c, 12d, 12e) is executed automatically during a startup or a reset of the controller.

## Revendications

1. Dispositif ( 1,4 ) de commande et/ou de régulation d'une machine-outil ou d'une machine de production, dans lequel le dispositif ( 1,4 ) de commande et/ou de régulation a un système ( 21a, 21b ) informatique, le système ( 21a, 21b ) informatique étant paramétrable, dans lequel le dispositif ( 1,4 ) de commande et/ou de régulation comprend :
- des moyens pour mettre à disposition des paramètres de défaut sous la forme d'un fichier ( 13 ) de paramètre de défaut lors du premier démarrage du dispositif ( 1,4 ) de commande et/ou de régulation pour assurer un premier démarrage correct, le fichier ( 13 ) de paramètre de défaut ne comprenant pas encore d'informations sur une configuration présente réellement de la machine, des moyens de mise à disposition d'une macro ( 12a,12b,12c,12d,12e ) pouvant être exécutée pour la sélection pour un utilisateur ou pour la sélection automatique en fonction de l'application de la macro ( 12a,12b,12c,12d,12e ) pouvant être exécutée pour la paramétrisation de la machine-outil ou de la machine de production,
- un interprète ( 10 ) pour exécuter la macro ( 12a,12b,12c,12d,12e ) pouvant être exécutée, qui fait partie d'un logiciel ( 2a,2b ) qui n'est pas en temps réel du système ( 21a,21b ) informatique et pour la détermination de paramètres pour la paramétrisation du dispositif ( 1,4 ) de commande et/ou de régulation sur la base de la macro ( 12a,12b,12c,12d,12e ) exécutée, et
- des moyens pour écraser les paramètres de défaut du fichier ( 13 ) de paramètre de défaut par les paramètres déterminés par l'interprète ( 10 ) sur la base de la macro ( 12a,12b,12c,12d,12e ) exécutée de manière à disposer, lors d'un démarrage à venir du dispositif ( 1,4 ) de commande et/ou de régulation, dans le fichier ( 13 ) de paramètre de défaut immédiatement de paramètres corrects correspondant à une configuration actuelle de la machine.

2. Dispositif de commande et/ou de régulation suivant la revendication 1, **caractérisé en ce que** la macro ( 12a,12b,12c,12d,12e ) pouvant être exécutée est programmée dans un langage évolué.

3. Dispositif de commande et/ou de régulation suivant la revendication 2, **caractérisé en ce qu'**il est prévu comme langage évolué XML ou HTML ou ACX.

4. Dispositif de commande et/ou de régulation suivant l'une des revendications précédentes, **caractérisé en ce que** la macro ( 12a,12b,12c,12d,12e ) pouvant être exécutée peut être rechargée et/ou exécutée à n'importe quel instant.

5. Dispositif de commande et/ou de régulation suivant l'une des revendications précédentes, **caractérisé en ce que** l'utilisateur est invité par la macro ( 12a,12b,12c,12d,12e ) pouvant être exécutée à entrer des données.

6. Dispositif de commande et/ou de régulation suivant l'une des revendications précédentes, **caractérisé en ce qu'**il est prévu comme système ( 21a,21b ) informatique un système informatique embedded.

7. Procédé de paramétrisation d'un dispositif ( 1,4 ) de commande et/ou de régulation d'une machine-outil ou d'une machine de production, le dispositif ( 1,4 ) de commande et/ou de régulation ayant un système ( 21a,21b ) informatique dans lequel le système ( 21a, 21b ) informatique peut être paramétré, dans lequel des paramètres de défaut sous la forme d'un fichier ( 13 ) de paramètre de défaut sont mis à disposition lors d'un premier démarrage du dispositif (1,4 ) de commande et/ou de régulation pour assurer un premier démarrage correct, le fichier ( 13 ) de paramètre de défaut ne comprenant pas encore d'informations sur une configuration présente réellement de la machine,
pour la paramétrisation de la machine-outil ou de la machine de production par une macro ( 12a,12b,12c,12d,12e ) pouvant être exécutée et choisie par un utilisateur ou automatiquement en fonction d'une application, la macro ( 12a,12b,12c,12d,12e ) pouvant être exécutée est exécutée par un interprète ( 10 ) qui fait partie d'un logiciel ( 2a,2b ) qui n'est pas en temps réel du système ( 21a,21b ) informatique, des paramètres de paramétrisation du dispositif ( 1,4 ) de commande et/ou de régulation sont déterminés par l'interprète sur la base de la macro ( 12a,12b,12c,12d,12e ) exécutée et les paramètres de défaut du fichier ( 13 ) de paramètre de défaut sont écrasés par des paramètres déterminés par l'interprète ( 10 ) sur la base de la macro ( 12a,12b,12c,12d,12e ) exécutée de manière à ce que, lors d'un démarrage à venir du dispositif ( 1,4 ) de commande et/ou de régulation, soient disponibles immédiatement dans le fichier ( 13 ) de paramètre de défaut des paramètres corrects correspondant à une configuration actuelle de la machine.

8. Procédé suivant la revendication 7, **caractérisé en ce que** l'on programme la macro ( 12a,12b,12c,12d,12e ) pouvant être exécutée dans un langage évolué.

9. Procédé suivant l'une des revendications 7 ou 8, **caractérisé en ce que** l'on recharge/ou exécute la macro ( 12a,12b,12c,12d,12e ) pouvant être exécutée à n'importe quel instant.

10. Procédé suivant l'une des revendications 7 à 9, **caractérisé en ce que** la macro ( 12a,12b,12c,12d,12e ) pouvant être exécutée invite l'utilisateur à entrer des données.

11. Procédé suivant l'une des revendications 7 à 10, **caractérisé en ce que** la macro ( 12a,12b,12c,12d,12e ) pouvant être exécutée est exécutée automatiquement lors d'un démarrage et/ou lors d'une remise à l'état initial du dispositif de commande et/ou de régulation.
